# EUROPÄISCHE PATENTSCHRIFT

(11) **EP 3 347 636 B1**
(45) Veröffentlichungstag und Bekanntmachung des Hinweises auf die Patenterteilung: **14.08.2019**
(21) Anmeldenummer: 16766245.1
(22) Anmeldetag: 02.09.2016
(51) Int. Cl.: F16L 5/04, H02G 3/04, H02G 3/22

(54) **LEITUNGSDURCHFÜHRUNG MIT INTEGRIERTEM RAUCHSTOPPER**
CIRCUIT LEAD-THROUGH WITH INTEGRATED SMOKE STOPPER
PASSAGE DE CABLE DOTE D'UN STOPPEUR DE FUMEE INTEGRE

(30) Priorität: 10.09.2015 EP 15184600
(43) Veröffentlichungstag der Anmeldung: 18.07.2018
(73) Patentinhaber: Hilti Aktiengesellschaft, 9494 Schaan (LI)
(72) Erfinder: STROIKE, Chad, Tulsa, Oklahoma 74134 (US); MÜNZENBERGER, Herbert, 65191 Wiesbaden (DE)
(74) Vertreter: Hilti Aktiengesellschaft Corporate Intellectual Property
(86) Internationale Anmeldenummer: PCT/EP2016/070679
(87) Internationale Veröffentlichungsnummer: WO 2017/042091

(56) Entgegenhaltungen:
- EP-A2- 1 847 747
- EP-A2- 2 572 760
- WO-A1-2010/067637
- WO-A1-2012/088565
- US-B1- 6 176 052

## Beschreibung

Die Erfindung betrifft eine Leitungsdurchführung zum Durchführen von Leitungen, wie z. B. Rohrleitungen, Kabeln oder Kabelkanälen, durch Bauteile, wie z. B. durch Decken oder Wände. Insbesondere betrifft die Erfindung eine verbesserte Leitungsdurchführung mit integriertem Rauchstopper.

Leitungsdurchführungen sind grundsätzlich aus dem Stand der Technik bekannt. Bekannte Leitungsdurchführungen werden beim Erstellen eines Bauteils, wie einer Wand oder einer Decke, in dieses eingebaut. Insbesondere können die Leitungsdurchführungen in Betondecken oder Betonwände eingegossen werden. Vorzugsweise sind derartige Leitungsdurchführungen mit einer Brandschutzfunktion ausgerüstet. Vom Zeitpunkt des Einbaus bzw. Eingiessens in das Bauteil über die Installation der Leitung durch die Leitungsdurchführung bis hin zur Fertigstellung des Gebäudes besteht daher bereits ein Brandschutz. Wichtig bei derartigen Leitungsdurchführungen ist deren interne Dichtigkeit gegen Rauchgas.

Aus dem Stand der Technik bekannte Leitungsdurchführungen werden nachträglich mit rauchstoppenden Maßnahmen ausgerüstet, wie beispielsweise Einbringen von Mineralwolle in den Ringspalt oder Abdichten mit Dichtmasse oder Spachtelmasse.

Aus der US 2004/0016190 A1 ist eine Vorrichtung zum Durchführen von Leitungen bekannt, die ein Hüllrohr und ein, mit dem Hüllrohr verbindbares Basisteil aufweist. Das Basisteil weist einen, eine Durchführöffnung umgebenden Aufnahmeraum für ein Abschottmittel auf. Das Abschottmittel ist eine intumeszierende Masse, die im Brandfall expandiert und die Durchführöffnung verschliesst. Zwischen dem Abschottmittel und einer Schulter ist eine ringförmige, membranartige Dichtung aus einem elastomeren Material angeordnet, die eine Öffnung aufweist, die kleiner ist als die Durchführöffnung des Hüllrohres.

Von Nachteil bei dieser Vorrichtung ist, dass insbesondere im Falle der Installation in einer Wand oder Decke über die vorhandene Dichtung keine absolute interne Dichtigkeit zur durchgeführten Leitung hergestellt werden kann. So kann Rauch entlang der Naht zwischen Leitungsdurchführung und hindurchgeführter Leitung die Leitungsdurchführung passieren.

Darüber hinaus können typische Leitungsdurchführungen ein Hüllrohr aufweisen, in dem nachträglich vorgeschnittene Schaumstoffplatten als Rauchstopper eingebaut werden, die eine Leitung, wie beispielsweise eine Rohrleitung, ein Kabel, ein Kabelbündel oder ein Kabelkanal, umhüllen und gleichzeitig versuchen abzudichten. Dabei können Leitungsdurchführungen mit einem zylindrischen Hüllrohr sowohl in Bereichen mit Brandschutzanforderungen eingesetzt werden, als auch in Bereichen, bei denen nur Anforderungen an Schallschutz, Rauchgasdichtigkeit oder Zugluftstopp gestellt werden.

Von Nachteil bei dieser nachträglichen Abdichtung mit Schaumformteilen ist, dass wenn ein neues Kabel oder Leitung verlegt werden muss, diese aus dem Hüllrohr entnommen und erneut angepasst werden müssen. Es wurde erkannt, dass ein einfaches Einschieben eines neuen Kabels oder Leitung nicht möglich ist, da die Schaumstoffplatten oder Schaumformteile des Standes der Technik dann aus den zylindrischen Hüllrohren herausgeschoben, bzw. zerstört werden.

EP1847747 A2 offenbart eine Leitungsdurchführung mit den Merkmalen des Oberbegriffs des Anspruchs 1.

Der vorliegenden Erfindung liegt daher die Aufgabe zugrunde, eine Leitungsdurchführung zum Durchführen von Leitungen durch Bauteile bereitzustellen, die im installierten Zustand und mit hindurchgeführter Leitung eine verbesserte Rauchgasdichtigkeit bietet. Insbesondere ist es Aufgabe der vorliegenden Erfindung eine Leitungsdurchführung zum Durchführen von Leitungen durch Bauteile bereitzustellen, die einen Rauchstopper umfasst, der weitgehend alle Zwickel schließen kann und nicht bei Änderung der Leitungsbelegung heraus genommen und neu angepasst werden muss.

Erfindungsgemäss wird die Aufgabe dadurch gelöst, dass ein zylindrisch ausgebildeter Dichtstopfen an einem zweiten Ende des Hüllrohres angeordnet ist, wodurch eine nahezu absolute Dichtigkeit gewährleistet ist, wenn eine Leitung durch die Leitungsdurchführung hindurchgeführt ist. Ein weiterer Vorteil dieses Dichtstopfens, insbesondere im Falle von Deckendurchführungen, besteht darin, dass der Randspalt zwischen dem Hüllrohr und der durchgeführten Rohrleitung nach oben hin verschlossen wird. Das hat zur Folge, dass der Randspalt gegenüber Rauchgas einfach und dauerhaft abgedichtet ist. Darüber hinaus gewährleistet dieser Dichtstopfen, dass Leitungen die von unten eingeschoben werden, automatisch einer der Führungsnuten zugeführt werden und leicht mittig durch den Dichtstopfen geführt werden können. Bei Leitungen die von oben durchführt werden sollen, sind Einführungsschlitze sichtbar und erleichtern die Durchführung.

Es ist ferner vorteilhaft, wenn der Dichtstopfen in einem steifen Ringkörper angeordnet ist, der an das zweite Ende des Hüllrohres anbringbar ist. Demnach bilden der Dichtstopfen und der Ringkörper ein Modul, das bedarfsweise an das Hüllrohr anbringbar ist, wodurch eine flexible Anpassung der Leitungsdurchführung an die geforderte Dichtigkeit möglich ist. Alternativ ist auch eine Integrierung des Dichtstopfens direkt in das Hüllrohr möglich.

Günstig ist es auch, wenn der steife Ringkörper in seiner Lage am zweiten Ende des Hüllohres über ein, mit dem Hüllrohr verbindbares ringförmiges Festlegeteil fixierbar ist. Das ringförmige Festlegeteil kann dabei auch ein Deckelelement sein, über welches die Leitungsdurchführung verschliessbar ist, solange keine Leitung durch diese hindurchgeführt ist. Vorzugsweise weist das Hüllrohr ein Aussengewinde auf, das mit einem zweiten Innengewinde des ringförmigen Festlegeteils verschraubbar ist, um dieses an dem Hüllrohr festzulegen. Auf diese Weise ist das Modul mit dem Ringkörper und dem Dichtstopfen einfach an dem Hüllrohr zu montieren.

Vorteilhaft ist der steife Ringkörper aus einem Hartkunststoff gefertigt, wodurch eine einfache Montage gewährleistet wird. Ferner kann durch die Materialkombination Kunststoffhüllrohr und Kunststoffringkörper auch eine rauchgasdichte Verbindung zwischen Hüllrohr und dem steifen Ringkörper gewährleistet werden. Des Weiteren weist ein Hartkunststoff produktionstechnische Vorteile auf, wie die effiziente Herstellbarkeit bei mechanischer Stabilität, und bietet auch für die angestrebte Lebensdauer der Leitungsdurchführung eine sichere Funktion ohne jegliche Korrosionsgefahr und damit Beeinträchtigung der Brandschutzfunktion.

Optimale Dichtungseigenschaften werden mit einem Dichtstopfen erzielt, welcher sich bei der Durchführung der Leitung durch die Leitungsdurchführung nahtlos dichtend an die Oberfläche der Leitung anlegen kann.

Insbesondere werden optimale Dichtungseigenschaften mit einem Dichtstopfen erzielt, der zylindrisch ausgebildet ist und eine erste Stirnfläche aufweist durch die eine Leitung hindurchgeführt werden kann, wobei die erste Stirnfläche eine sternförmige Teilung aufweist, wobei sich die durch die sternförmige Teilung definierten Kreissektoren zu einem Vollkreis mit einem Kreismittelpunkt ergänzen, und wobei der Dichtstopfen eine zweite Stirnfläche aufweist, die von der ersten Stirnfläche abgewandt und beabstandet ist, wobei sich die sternförmige Teilung, ausgehend von dem Kreismittelpunkt, entlang einer Rotationsachse des Dichtstopfens und in Richtung der zweite Stirnfläche derart aufweitet, dass die zweite Stirnfläche kreisringförmig ausgebildet ist und innerhalb des Dichtstopfen ein kegelförmiger Hohlraum gebildet ist entlang dessen Mantelfläche wenigstens eine Führungsnut ausgebildet ist.

Dadurch kann eine Leitung, wie beispielsweise eine Rohrleitung, ein Kabel, ein Kabelbündel oder ein Kabelkanal, besonders einfach in den Dichtstopfen eingeführt werden, wobei die Aufweitung der sternförmigen Teilung, die in dem kegelförmigen Hohlraum mit wenigstens einer Führungsnut resultiert, das Einführen der Leitung deutlich erleichtert. Ein solcher Dichtstopfen bildet die Grundlage für eine Leitungsdurchführung mit einem zylindrischen Hüllrohr, bei dem der Dichtstopfen beispielsweise im Falle der Änderung der Leitungsbelegung nicht mehr entnommen werden muss.

In einer besonders bevorzugten Ausgestaltung ist der Dichtstopfen, bezogen auf seine Gesamtlänge entlang der Rotationsachse und ausgehend von der ersten Stirnfläche, wenigstens zu 1/4 und/oder höchstens zu 3/4 als Vollzylinder ausgebildet. Mit anderen Worten ist der Dichtstopfen bevorzugt nur in einem vorderen Teil durch Kreissektoren beziehungsweise Zylindersektoren gebildet, die sich zu einem Vollkreis beziehungsweise zu einem Vollzylinder ergänzen.

Es hat sich als vorteilhaft herausgestellt, wenn an der ersten Stirnfläche wenigstens sechs Kreissektoren ausgebildet sind. Vorteilhafterweise sind in dem Bereich des Dichtstopfens, in dem der kegelförmige Hohlraum ausgebildet ist, wenigstens sechs Kreisbogenabschnitte vorgesehen, die sich jeweils zu einem Kreisring ergänzen. Vorzugsweise entspricht die Anzahl der Führungsnuten der Anzahl der Kreissektoren. Die Führungsnuten können derart ausgebildet sein, dass sie sich in Richtung der zweiten Stirnfläche aufweiten. Alternativ kann eine Weite der Führungsnuten in Richtung der der zweiten Stirnfläche konstant sein.

Um ein Einschieben von Leitungen in den Dichtstopfen zu erleichtern, können die durch die sternförmige Teilung definierten Schnittflächen und/oder Führungsnuten eine oder mehrere Gleitschichten aufweisen. Diese Gleitschicht kann beispielsweise in Form einer Folie bereitgestellt sein, die die definierten Schnittflächen und/oder Führungsnuten bevorzugt abdeckt. Alternativ oder zusätzlich kann die Gleitschicht in Form eines beschichteten Glasfasergewebes, einer Pappe oder eines Papiers, aber auch einer geeigneten geometrischen Oberflächenbeschaffenheit bereitgestellt werden.

Es hat sich als vorteilhaft herausgestellt, wenn der Dichtstopfen ein Polyurethan-RIM-Formteil ist. Vorzugsweise besteht der Dichtstopfen aus Schaumstoff, weiter bevorzugt aus einem vergleichsweise weichen PUR-Schaumstoff. Alternativ zur Bereitstellung als RIM-Formteil kann der Dichtstopfen auch geschnitten und/oder gefräst sein.

Ferner hat sich als vorteilhaft herausgestellt, wenn der Dichtstopfen mindestens ein oder mehrere Brandschutzadditive aufweist.

In einer besonders bevorzugten Weiterbildung weist der Dichtstopfen einen Längsschlitz, bevorzugt genau einen Längsschlitz, auf, der sich parallel zur Rotationsachse durchgängig von der ersten Stirnfläche zur zweiten Stirnfläche erstreckt, sodass der Dichtstopfen in ein Rippenprofil abgewickelt werden kann beziehungsweise der Dichtstopfen durch Aufwickeln des Rippenprofils gebildet werden kann. Ein derartiges Rippenprofil bietet die Grundlage für ein vereinfachtes Herstellungsverfahren, das später mit Bezug auf das erfindungsgemäße Herstellungsverfahren beschrieben wird.

Bezüglich der Leitungsdurchführung wird die Aufgabe gelöst durch eine Leitungsdurchführung mit einem zylindrischen Hüllrohr und wenigstens einem vorbeschriebenen Dichtstopfen. Erfindungsgemäß ist der Dichtstopfen derart in dem Hüllrohr angeordnet, dass die erste Stirnfläche des Dichtstopfens dem membranartigen Dichtelement zugewandt ist.

Dies hat den Vorteil, dass eine von unten eingeführte Leitung durch die sich erfindungsgemäß aufweitende sternförmige Teilung mit ausgebildeter Führungsnut verhakungsfrei und mittig durch den Dichtstopfen geführt werden kann. Bei Leitungen die von oben durchführt werden sollen, sind Einführungsschlitze sichtbar und erleichtern die Durchführung. Diesbezüglich schließt die Erfindung die Erkenntnis ein, dass Dichtstopfen, insbesondere solche aus Schaumstoff, angeordnet in zylindrischen Hüllrohren grundsätzlich eine einfache und preiswerte Lösung sind.

Günstig herstellbar ist das Modul aus Ringkörper und oben beschriebenen Dichtstopfen, wenn der Dichtstopfen stoffschlüssig innen am steifen Ringkörper festgelegt ist. Der Dichtstopfen kann demnach z. B. durch einfaches Einschieben, Einlegen oder Verkleben mit dem Ringkörper zu einer Einheit verbunden sein.

Weitere Vorteile und Maßnahmen der Erfindung ergeben sich aus den Unteransprüchen, der nachfolgenden Beschreibung und den Figuren. In den Figuren ist die Erfindung in einem Ausführungsbeispiel dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Leitungsdurchführung mit einem Hüllrohr in einer Wand, im Längsschnitt;
- Fig. 2: eine schematische Darstellung eines erfindungsgemäßen Dichtstopfens für die Leitungsdurchführung;
- Fig. 3: einen erfindungsgemäßen Dichtstopfen für die Leitungsdurchführung abgewickelt in ein Rippenprofil.

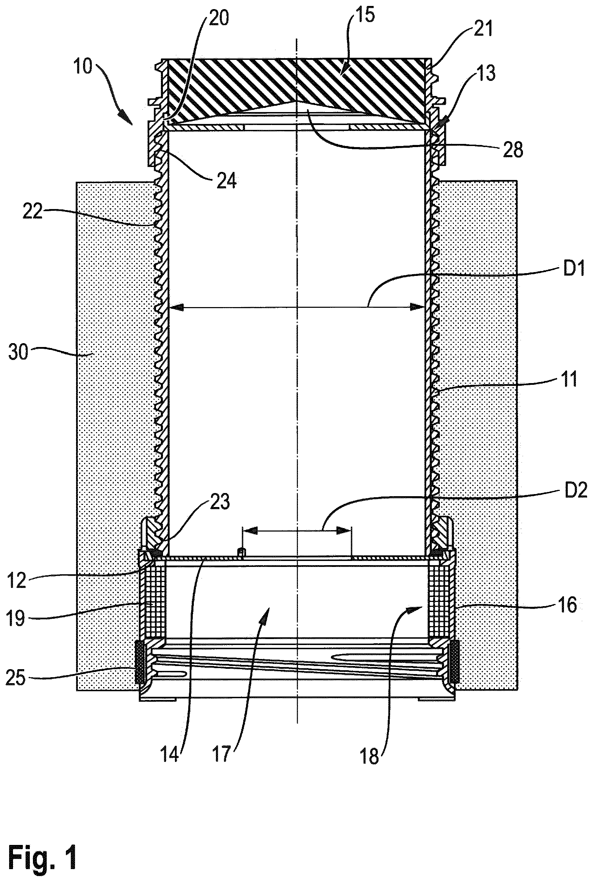

Eine aus Fig. 1 ersichtliche und in einem Bauteil 30, wie z. B. einer Betonwand, angeordnete Leitungsdurchführung 10 umfasst ein Hüllrohr 11 mit einem Aussengewinde 22, das sich über die gesamte Längserstreckung des Hüllrohres 11 erstreckt. Weiter umfasst die Leitungsdurchführung 11 ein Basisteil 16, das einen, eine Durchführöffnung 17 umgebenden Aufnahmeraum 18 für ein Abschottmittel 19 aufweist. Das Abschottmittel 19 ist z. B. ein Ring aus intumeszierendem Material und stellt den Brandschutz der Leitungsdurchführung 10 sicher. Über einen Dichtring 25 der aussen an dem Basisteil 16 angeordnet ist wird eine Aussenabdichtung zum umgebenden Bauteil 30 erreicht.

Die Leitungsdurchführung 10 ist in Fig. 1 als Eingiessteil ausgebildet, das vor der Erstellung eines Bauteils 30 in Form einer Betonwand an einer in den Figuren nicht dargestellten Schalung festlegbar ist und beim Ausgießen der Schalung mit Beton in dem Bauteil 30 eingebettet wird. Dazu ist an dem Basisteil 16 ein in den Figuren nicht sichtbarer Flansch vorhanden, der Befestigungsöffnungen aufweist, an denen das Basisteil 16 über Nägel o. ä. an der Schalung festlegbar ist.

Das Basisteil 16 weist ein erstes Innengewinde 23 auf, über welches das Basisteil 16 an einem ersten Ende 12 des Hüllrohres 11 mit dessen Aussengewinde 22 verschraubt ist. Zwischen dem Basisteil 16 und dem Hüllrohr 11 ist ein ringförmiges, membranartiges Dichtelement 14 aus einem gummielastischen Material angeordnet, das einen Innendurchmesser D2 aufweist, der kleiner ist als ein Innendurchmesser D1 des Hüllrohres 11. Dieses membranartige Dichtelement 14 definiert eine erste Dichtebene der Leitungsdurchführung 10.

An einem zweiten axialen Ende 13 des Hüllrohres 11 ist ein zylindrisch ausgebildeter Dichtstopfen 15 aus einem schaumstoffartigen Material angeordnet, und definiert eine zweite Dichtebene der Leitungsdurchführung 10, d h. einen Rauchstopper. Der zylindrisch ausgebildete Dichtstopfen 15 ist in einem steifen Ringkörper 20 aus Hartkunststoff angeordnet, mit dem er stoffschlüssig, z. B. durch Einschieben, Einkleben oder Verkleben, zu einem Modul verbunden ist. Über ein ringförmiges Festlegeteil 21, das ebenfalls als Verschlusskappe oder Deckelteil ausgebildet sein kann und das ein zweites Innengewinde 24 aufweist, das mit dem Aussengewinde 22 des Hüllrohres 11 verschraubt ist, ist der Ringkörper 20 an dem Hüllrohr 11 festgelegt, wie aus Fig. 1 ersichtlich.

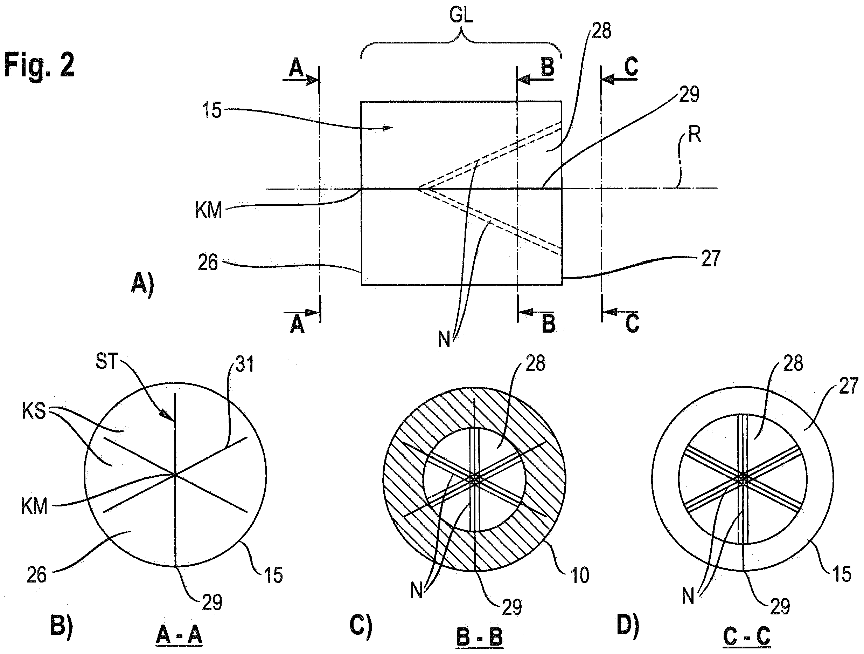

Fig. 2 zeigt einen erfindungsgemäßen Dichtstopfen 15, wobei Fig. 2A den Dichtstopfen 15 mit seiner Gesamtlänge GL in Seitenansicht zeigt und in Fig. 2B, C, D, die jeweiligen Schnitte A-A, B-B, C-C dargestellt sind.

Erfindungsgemäß weitet sich die sternförmige Teilung ST, ausgehend von dem Kreismittelpunkt KM entlang der Rotationsachse R des Dichtstopfens 15 und in Richtung der zweiten Stirnfläche 27 (d.h. vorliegend nach rechts) auf. Dadurch wird die zweite Stirnfläche 27 kreisringförmig ausgebildet. Dies ist der Fig. 2D zu entnehmen. Durch die erfindungsgemäße Aufweitung innerhalb des Dichtstopfens wird ein kegelförmiger Hohlraum 28 innerhalb des Dichtstopfens 15 gebildet. Entlang der Mantelfläche des kegelförmigen Hohlraums 28 sind sechs Führungsnuten N ausgebildet, die der Kabelführung dienen. Auf jeden der Kreissektoren KS entfällt eine Führungsnut N.

Der kegelförmige Hohlraum 28 ist in der Seitenansicht in Fig. 2A schraffiert dargestellt, da er innerhalb des Dichtstopfens 15 verläuft. Dementsprechend sind auch nur zwei Führungsnuten in Fig. 2 A dargestellt.

Wie der Fig. 2B entnommen werden kann, ist der Dichtstopfen 15 an der ersten Stirnfläche 26 derart sternförmig geteilt, dass er sechs gleich große Kreissektoren KS bildet.

Der Dichtstopfen 15 weist genau einen Längsschlitz 29 auf. Der Längsschlitz 29 erstreckt sich parallel zur Rotationsachse R durchgängig von der ersten Stirnfläche 26 zu der zweiten Stirnfläche 27. Dies ist sowohl der Seitenansicht in Fig. 2A als auch den jeweiligen Ansichten in Fig. 2B, C und D zu entnehmen.

Der Fig. 2D kann ebenfalls entnommen werden, dass sich die sternförmige Teilung ST mit ihrem Kreismittelpunkt KM, die von der ersten Stirnfläche 26 ausgeht, nicht vollständig bis zur zweiten Stirnfläche 27 erstreckt. Vielmehr verbleibt die zweite Stirnfläche 27 als Kreisring, der nur durch den Längsschlitz 29 geschlitzt ist. Durch den Längsschlitz 29 kann der Dichtstopfen 15 in ein Rippenprofil abgewickelt werden beziehungsweise kann ein Rippenprofil, das beispielsweise in Form eines Polyurethan-RIM-Formteils bereitgestellt wird, zu dem Dichtstopfen 15 der Fig. 2 aufgerollt werden

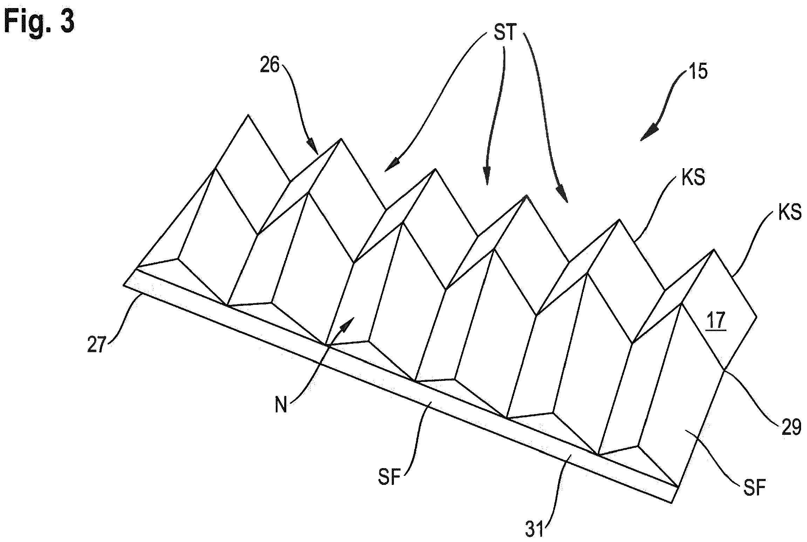

Fig. 3 zeigt einen erfindungsgemäßen Dichtstopfen 15, der als Rippenprofil abgewickelt ist. Der Dichtstopfen 15 ist vorliegend als Polyurethan-RIM-Formteil bereitgestellt. Im oberen Teil der Fig. 3 ist die sternförmige Teilung ST, die die Kreissektoren KS bildet, entsprechend in abgewickelter Form dargestellt. Im unteren Teil der Fig. 3 ist die zweite Stirnfläche 27 ersichtlich, die im aufgewickelten Zustand des in Fig. 3 gezeigten Rippenprofils einen Kreisring beschreibt. Durch die von der ersten Stirnfläche 26 hin zur zweiten Stirnfläche 27 (in Bildrichtung nach vorne) abfallenden Grate der Rippen sind die erfindungsgemäßen Führungsnuten N gebildet.

Die durch die sternförmige Teilung ST definierten Schnittflächen SF weisen im vorliegend dargestellten Ausführungsbeispiel eine Gleitschicht 31 auf, die durch eine Beschichtung mittels eines Gleitmittels realisiert ist. Auf der rechten Seite des streifenförmig bereitgestellten Rippenprofils, das in aufgewickeltem Zustand den Dichtstopfen 15 bildet, ist der Längsschlitz 29 dargestellt.

Beim Hindurchführen einer Leitung durch die Leitungsdurchführung 10, wie z. B. eines in den Figuren nicht dargestellten Rohres, Kabels, Kabelbündels o.ä., durch die Durchführöffnung 17 der Leitungsdurchführung 10 werden das membranartige Dichtelement 14 und der zylindrisch ausgebildete Dichtstopfen 15 geweitet und legen sich filmartig dichtend an die Oberfläche der Leitung an. Dabei weist die Leitung einen Durchmesser auf, der vorzugsweise im Wesentlichen dem Innendurchmesser D1 des Hüllrohres 11 entspricht. Es wird eine nahezu absolut dichte Durchführung der Leitung durch die Leitungsdurchführung 10 erreicht.

## Patentansprüche

1. Leitungsdurchführung (10) zum Durchführen von Leitungen durch ein Bauteil (30), mit einem Hüllrohr (11), mit einem an einem ersten axialen Ende (12) des Hüllrohres (11) angeordneten Basisteil (16), das einen eine Durchführöffnung (17) umgebenden Aufnahmeraum (18) für ein Abschottmittel (19) aufweist, mit einem ringförmigen, membranartigen Dichtelement (14), das an dem ersten axialen Ende (12) des Hüllrohres (11) angeordnet ist, und mit mindestens einem Dichtstopfen (15), der an einem zweiten Ende (13) des Hüllrohres (11) angeordnet ist,
**dadurch gekennzeichnet,**
**dass** der Dichtstopfen (15) zylindrisch ausgebildet ist und eine erste Stirnfläche (26) aufweist durch die eine Leitung hindurchgeführt werden kann, wobei die erste Stirnfläche (26) eine sternförmige Teilung aufweist, wobei sich die durch die sternförmige Teilung (ST) definierten Kreissektoren (KS) zu einem Vollkreis mit einem Kreismittelpunkt (KM) ergänzen, und wobei der Dichtstopfen (15) eine zweite Stirnfläche (27) aufweist, die von der ersten Stirnfläche (26) abgewandt und beabstandet ist, wobei sich die sternförmige Teilung (ST), ausgehend von dem Kreismittelpunkt (KM), entlang einer Rotationsachse (R) des Dichtstopfens (15) und in Richtung der zweite Stirnfläche (27) derart aufweitet, dass die zweite Stirnfläche (27) kreisringförmig ausgebildet ist und innerhalb des Dichtstopfen (15) ein kegelförmiger Hohlraum (28) gebildet ist entlang dessen Mantelfläche wenigstens eine Führungsnut (N) ausgebildet ist.

2. Leitungsdurchführung nach Anspruch 1,
**dadurch gekennzeichnet, dass** der Dichtstopfen (15), bezogen auf seine Gesamtlänge (GL) entlang der Rotationsachse (R) und ausgehend von der ersten Stirnfläche (26), wenigstens zu 1/4 und/oder höchstens zu 3/4 als Vollzylinder ausgebildet ist.

3. Leitungsdurchführung nach Anspruch 1 oder 2,
**dadurch gekennzeichnet, dass** an der ersten Stirnfläche (26) wenigstens sechs Kreissektoren (KS) ausgebildet sind.

4. Leitungsdurchführung nach einem der vorangehenden Ansprüche,
**dadurch gekennzeichnet, dass** die durch die sternförmige Teilung (ST) definierten Schnittflächen (SF) und/oder die Führungsnut (N) eine Gleitschicht (31) aufweisen.

5. Leitungsdurchführung nach einem der vorangehenden Ansprüche,
**dadurch gekennzeichnet, dass** der Dichtstopfen (15) ein Polyurethan-RIM-Formteil ist.

6. Leitungsdurchführung nach einem der vorangehenden Ansprüche,
**dadurch gekennzeichnet, dass** der Dichtstopfen (15) mindestens ein Brandschutzadditiv aufweist.

7. Leitungsdurchführung nach einem der vorangehenden Ansprüche,
**dadurch gekennzeichnet, dass** der Dichtstopfen (15) einen Längsschlitz (29), bevorzugt genau einen Längsschlitz (29) aufweist, der sich parallel der Rotationsachse (R) durchgängig von der ersten Stirnfläche (26) zur der zweiten Stirnfläche (27) erstreckt, so dass der Dichtstopfen (15) in ein Rippenprofil abgewickelt werden kann bzw. der Dichtstopfen (15) durch aufwickeln des Rippenprofils gebildet werden kann.

8. Leitungsdurchführung nach einem der vorangehenden Ansprüche,
**dadurch gekennzeichnet, dass** das Abschottmittel (19) in dem Aufnahmeraum (18) ein Ring aus intumeszierendem Material ist.

9. Leitungsdurchführung nach einem der vorangehenden Ansprüche,
**dadurch gekennzeichnet, dass** der mindestens eine Dichtstopfen (15) in einem steifen Ringkörper (20) angeordnet ist, der an das andere Ende (13) des Hüllrohres (11) anbringbar ist.

10. Leitungsdurchführung nach Anspruch 9,
**dadurch gekennzeichnet, dass** der steife Ringkörper (20) in seiner Lage am anderen Ende (13) des Hüllohres (11) über ein, mit dem Hüllrohr (11) verbindbares ringförmiges Festlegeteil (21) fixierbar ist.

11. Leitungsdurchführung nach Anspruch 9 oder 10,
**dadurch gekennzeichnet, dass** der steife Ringkörper (20) aus einem Hartkunststoff gefertigt ist.

12. Leitungsdurchführung nach einem der Ansprüche 9 bis 11,
**dadurch gekennzeichnet, dass** der Dichtstopfen (15) stoffschlüssig innen am steifen Ringkörper (20) festgelegt ist.

## Claims

1. Cable feed-through (10) for feeding cables through a component (30), with a cladding tube (11), with a base part (16) arranged at a first axial end (12) of the cladding tube (11), which has an accommodation area (18) for a bulkhead (19) surrounding a feed-through opening (17), with a ring-shaped, membrane-type sealing element (14), which is arranged at the first axial end (12) of the cladding tube (11), and with at least one sealing plug (15), which is arranged at a second end (13) of the cladding tube (11),
**characterised in that**
the sealing plug (15) is made cylindrical and has a first end face (26), through which a cable may be fed, in which the first end face (26) has a star-shaped division, in which the circular sectors (KS) defined by the star-shaped division (ST) increase to a full circle with a circle centre (KM), and in which the sealing plug (15) has a second end face (27), which is turned away and at a distance from the first end face (26), in which, starting from the circle centre (KM), the star-shaped division (ST) extends along a rotation axis (R) of the sealing plug (15) in the direction of the second end face (27) in such a way that the second end face (27) is made circular and a conical cavity (28) is formed inside the sealing plug (15), along the lateral surface of which at least one guide groove (N) is formed.

2. Cable feed-through according to claim 1,
**characterised in that** along the rotation axis (R), starting from the first end face (26), the sealing plug (15) is made at least 1/4 and/or at most 3/4 as a full cylinder with reference to its total length (GL).

3. Cable feed-through according to claim 1 or 2,
**characterised in that** at least six circular sectors (KS) are formed on the first end face (26).

4. Cable feed-through according to one of the previous claims,
**characterised in that** the interfaces (SF) defined by the star-shaped division (ST) and/or the guide groove (N) have an anti-friction layer (31).

5. Cable feed-through according to one of the previous claims,
**characterised in that** the sealing plug (15) is a polyurethane RIM moulded part.

6. Cable feed-through according to one of the previous claims,
**characterised in that** the sealing plug (15) has at least one fire protection additive.

7. Cable feed-through according to one of the previous claims,
**characterised in that** the sealing plug (15) has a longitudinal slot (29), preferably precisely one longitudinal slot (29), which extends parallel to the rotation axis (R) continuously from the first end face (26) to the second end face (27), so that the sealing plug (15) may be unwound into a ribbed profile or the sealing plug (15) may be formed by rolling up the ribbed profile.

8. Cable feed-through according to one of the previous claims,
**characterised in that** the bulkhead (19) in the accommodation area (18) is a ring made of intumescent material.

9. Cable feed-through according to one of the previous claims,
**characterised in that** the at least one sealing plug (15) is arranged in a stiff ring body (20), which may be applied to the other end (13) of the cladding tube (11).

10. Cable feed-through according to claim 9,
**characterised in that** in its positon at the other end (13) of the cladding tube (11) the stiff ring body (20) may be fixed via a ring-shaped fastening part (21) that may be connected to the cladding tube (11).

11. Cable feed-through according to claim 9 or 10,
**characterised in that** the stiff ring body (20) is made of a hard plastic.

12. Cable feed-through according to one of claims 9 to 11,
**characterised in that** the sealing plug (15) is fixed to the stiff ring body (20) firmly bonded on the inside.

## Revendications

1. Passage de conduite (10) destiné à faire passer des conduites à travers un élément de construction (30), comportant un tube de gainage (11), une partie de base (16) agencée sur une première extrémité axiale (12) du tube de gainage (11), laquelle partie de base comporte un espace de réception (18) pour des moyens de cloisonnement (19), l'espace de réception (18) entourant une ouverture de passage (17), un élément d'étanchéité annulaire (14) analogue à une membrane agencé sur la première extrémité axiale (12) du tube de gainage (11), et au moins un bouchon d'étanchéité (15) agencé sur une seconde extrémité (13) du tube de gainage (11),
**caractérisé en ce que**
le bouchon d'étanchéité (15) est formé de manière cylindrique et comporte une première face frontale (26) à travers laquelle une conduite peut être passée, dans lequel la première face frontale (26) comporte une division en forme d'étoile, dans lequel les secteurs circulaires (KS) définis par la division en forme d'étoile (ST) forment ensemble un cercle complet avec un centre de cercle (KM), et dans lequel le bouchon d'étanchéité (15) comporte une seconde face frontale (27) qui est opposée à la première face frontale (26) et espacée de celle-ci, dans lequel la division en forme d'étoile (ST) s'élargit en partant du centre de cercle (KM), le long d'un axe de rotation (R) du bouchon d'étanchéité (15) et en direction de la seconde face frontale (27), de sorte que la seconde face frontale (27) est configurée en forme d'anneau et une cavité conique (28) est formée à l'intérieur du bouchon d'étanchéité (15) et au moins une rainure de guidage (N) est formée le long de sa surface extérieure.

2. Passage de conduite selon la revendication 1,
**caractérisé en ce que** le bouchon d'étanchéité (15) est configuré sous la forme d'un cylindre plein au moins sur 1/4 et/ou au plus sur 3/4 de sa longueur totale (GL) le long de l'axe de rotation (R) et en partant de la première face frontale (26).

3. Passage de conduite selon la revendication 1 ou 2,
**caractérisé en ce qu'**au moins six secteurs circulaires (KS) sont formés sur la première face frontale (26) .

4. Passage de conduite selon l'une des revendications précédentes,
**caractérisé en ce que** les faces de coupe (SF) définies par la division en forme d'étoile (ST) et/ou la rainure de guidage (N) comportent une couche de glissement (31).

5. Passage de conduite selon l'une des revendications précédentes,
**caractérisé en ce que** le bouchon d'étanchéité (15) est une pièce moulée en polyuréthane-RIM.

6. Passage de conduite selon l'une des revendications précédentes,
**caractérisé en ce que** le bouchon d'étanchéité (15) comporte au moins un additif de protection contre le feu.

7. Passage de conduite selon l'une des revendications précédentes,
**caractérisé en ce que** le bouchon d'étanchéité (15) comporte une fente longitudinale (29), de préférence exactement une fente longitudinale (29), qui s'étend en continu parallèlement à l'axe de rotation (R) de la première face frontale (26) à la seconde face frontale (27), de sorte que le bouchon d'étanchéité (15) peut être déroulé en obtenant un profil rainuré ou le bouchon d'étanchéité (15) peut être formé en enroulant le profil rainuré.

8. Passage de conduite selon l'une des revendications précédentes,
**caractérisé en ce que** les moyens de cloisonnement (19) dans l'espace de réception (18) sont un anneau en matériau intumescent.

9. Passage de conduite selon l'une des revendications précédentes,
**caractérisé en ce que** le au moins un bouchon d'étanchéité (15) est agencé dans un corps annulaire rigide (20) qui peut être attaché à l'autre extrémité (13) du tube de gainage (11).

10. Passage de conduite selon la revendication 9,
**caractérisé en ce que** le corps annulaire rigide (20) dans sa position sur l'autre extrémité (13) du tube de gainage (11) peut être fixé par l'intermédiaire d'une pièce de fixation annulaire (21) pouvant être assemblée au tube de gainage (11).

11. Passage de conduite selon la revendication 9 ou 10,
**caractérisé en ce que** le corps annulaire rigide (20) est fabriqué à partir d'une matière plastique dure.

12. Passage de conduite selon l'une des revendications 9 à 11,
**caractérisé en ce que** le bouchon d'étanchéité (15) est fixé par assemblage de matière à l'intérieur du corps annulaire rigide (20).
